(19) Europäisches Patentamt
European Patent Office
Office européen des brevets

(11) **EP 2 564 233 B1**

(12) **EUROPÄISCHE PATENTSCHRIFT**

(45) Veröffentlichungstag und Bekanntmachung des Hinweises auf die Patenterteilung:
**02.04.2014 Patentblatt 2014/14**

(21) Anmeldenummer: **11805743.9**

(22) Anmeldetag: **29.11.2011**

(51) Int Cl.:
*G01S 11/10* *(2006.01)*   *G07B 15/06* *(2011.01)*
*G08G 1/01* *(2006.01)*

(86) Internationale Anmeldenummer:
**PCT/AT2011/000479**

(87) Internationale Veröffentlichungsnummer:
**WO 2012/075514 (14.06.2012 Gazette 2012/24)**

(54) **VERFAHREN UND VORRICHTUNGEN ZUM ERMITTELN DES ABSTANDS ZWISCHEN EINER FUNKBAKE UND EINEM FAHRZEUGGERÄT**

METHOD AND DEVICES FOR DETERMINING THE DISTANCE BETWEEN A RADIO BEACON AND A VEHICLE DEVICE

PROCÉDÉ ET DISPOSITIFS DE DÉTERMINATION DE LA DISTANCE ENTRE UNE BALISE RADIO ET UN APPAREIL POUR VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2010 EP 10450189**

(43) Veröffentlichungstag der Anmeldung:
**06.03.2013 Patentblatt 2013/10**

(73) Patentinhaber: **Kapsch TrafficCom AG**
**1120 Wien (AT)**

(72) Erfinder:
• **SMELY, Dieter**
**A-2320 Schwechat (AT)**

• **WINKLER, Josef**
**A-2500 Baden (AT)**
• **NAGY, Oliver**
**A-1190 Wien (AT)**
• **PAIER, Alexander**
**A-1020 Wien (AT)**
• **POVOLNY, Robert**
**A-1190 Wien (AT)**

(74) Vertreter: **Weiser, Andreas**
**Patentanwalt**
**Kopfgasse 7**
**1130 Wien (AT)**

(56) Entgegenhaltungen:
**US-A- 5 790 052        US-A1- 2009 102 718**
**US-A1- 2009 303 004**

**Beschreibung**

Die vorliegende Erfindung betrifft ein Verfahren zum Ermitteln des Abstands zwischen einer Funkbake und einem sie passierenden Fahrzeuggerät in einem Straßenmautsystem, wobei zumindest eine der beiden Komponenten Funkbake und Fahrzeuggerät ein Signal mit einem bekannten zeitlichen Verlauf seiner Frequenz aussendet. Die Erfindung betrifft ferner eine Funkbake und ein Fahrzeuggerät zur Implementierung eines derartigen Verfahrens.

In funkbakenbasierten Straßenmautsystemen, beispielsweise nach dem DSRC- (dedicated short range communication) oder WAVE-(wireless access in a vehicle environment) -Standard, kommunizieren von den Fahrzeugen mitgeführte Fahrzeuggeräte (onboard units, OBUs) über Kurzreichweitenfunk mit geografisch verteilten Funkbaken, sobald sie diese passieren. Die Funkkommunikation dient in der Regel zum Verorten des Fahrzeugs auf den Funkabdeckungsbereich der Funkbake, um Ortsnutzungen zu vergebühren, oder einfach auch nur zum Absetzen von Mautdaten, die von der OBU erzeugt werden, an Funkbaken auf ihrem Weg.

Häufig ist es wünschenswert, den Abstand zu bestimmen, in dem ein Fahrzeug eine Funkbake passiert, z.B. für die Ahndung von Mautvergehen bei mehrspurigen Straßen: Passieren mehrere Fahrzeuge nebeneinander auf verschiedenen Fahrspuren die Funkbake und weist eine ihrer Funkkommunikationen auf ein Mautvergehen hin, z.B. eine fehlgeschlagene Mautgebührenabbuchung, einen ungenügenden Kontostand eines Verrechnungskontos, eine defekte oder falsch eingestellte OBU usw., oder soll eine von der Fahrspur abhängige Gebührenhöhe bzw. Maut (Mehrinsassen-Fahrspur) berechnet werden, dann ist es entscheidend, zu wissen, welches der nebeneinander fahrenden Fahrzeuge hierfür verantwortlich ist, um dieses z.B. visuell vor Ort oder auf einem Beweisfoto des Straßenabschnitts der Bake identifizieren zu können.

Zur Bestimmung des Abstands sind derzeit verschiedene Verfahren bekannt. Eine Lösung besteht darin, in der Funkbake mehrere örtlich versetzte Empfangsantennen zu verwenden, um aus Phasendifferenzmessungen zwischen den von den einzelnen Antennen empfangenen OBU-Signalen die Positionen der OBUs im Funkempfangsfeld zu bestimmen. Eine andere Lösung ist aus der US 5,790,052 bekannt und beruht auf Dopplermessungen der unterschiedlichen Relativgeschwindigkeiten einer OBU gegenüber örtlich versetzten Empfangsantennen einer Funkbake, um aus dem Verhältnis der Geschwindigkeitsmesswerte das Verhältnis der Abstände zu den beiden Empfangsantennen zu bestimmen. Schließlich wäre es auch möglich, für jede Fahrspur eine separate Funkbake mit geringem Funkabdeckungsbereich zu verwenden. Alle diese bekannten Lösungen sind aufwendig, nicht zuletzt weil sie auf mehreren Empfangsantennen beruhen.

Die Erfindung setzt sich zum Ziel, Verfahren und Vorrichtungen zur Bestimmung des Abstands zwischen einer OBU und einer Funkbake in einem Straßenmautsystem zu schaffen, welche geringeren apparativen Aufwand zur Umsetzung benötigen als die bekannten Lösungen.

Dieses Ziel wird in einem ersten Aspekt der Erfindung mit einem Verfahren der einleitend genannten Art erreicht, welches sich auszeichnet durch die Schritte:

Empfangen des Signals in der anderen der beiden Komponenten bei der Passage und Aufzeichnen des zeitlichen Verlaufes seiner Frequenz relativ zum bekannten zeitlichen Verlauf;
Detektieren einer einen ersten Schwellwert überschreitenden Änderung im aufgezeichneten Frequenzverlauf;
Aufsuchen zweier zeitlich vor und nach der detektierten Änderung liegender Fernbereiche im Frequenzverlauf, welche eine Frequenzänderung unter einem zweiten Schwellwert zeigen;
Skalieren des aufgezeichneten Frequenzverlaufes derart, dass die Fernbereiche vorgegebene Werte annehmen; und
Ermitteln des genannten Abstandes aus dem skalierten Frequenzverlauf.

Die Erfindung macht sich den Umstand zunutze, dass die dopplerbedingte Frequenzänderung des Funkbaken- bzw. OBU-Signals zum Zeitpunkt der unmittelbaren Passage, wenn der Abstand minimal ist, umgekehrt proportional zu dem Normalabstand zwischen Funkbake und OBU ist, sofern der Frequenzverlauf auf die Relativgeschwindigkeit zwischen Bake und Fahrzeug normiert wird. Letzteres wird durch Auswertung des Frequenzverlaufs in "Fernbereichen" bewerkstelligt: In diesen Fernbereichen ist die gegenseitige Entfernung der Komponenten im Vergleich zum Normalabstand sehr groß und dieser vernachlässigbar, so dass das Ausmaß der Dopplerverschiebung dort im Wesentlichen nur von der Eigengeschwindigkeit abhängt und diese daraus bestimmbar ist. In weiterer Folge kann aus der Analyse des um die Eigengeschwindigkeit kompensierten Frequenzverlaufs im Nahbereich der Bake, wo die größte Änderung ("Dopplersprung") des Frequenzverlaufs auftritt, die Abhängigkeit vom Normalabstand und damit dieser selbst ermittelt werden. Im Ergebnis kann mit einem einzigen Empfänger und einer einzigen Antenne der Passageabstand alleine aus der Funkkommunikation zwischen OBU und Funkbake bestimmt werden.

Der skalierte Frequenzverlauf kann im Nahbereich auf verschiedenste Arten signalanalytisch ausgewertet werden. Gemäß einer ersten Ausführungsform der Erfindung wird der genannte Abstand aus der Steigung des skalierten Frequenzverlaufes in einem Wendepunkt desselben ermittelt. Die Steigung im Wendepunkt ist umgekehrt proportional zum Passageabstand und kann beispielsweise durch Differentiation einfach ermittelt werden.

Gemäß einer alternativen Ausführungsform der Erfindung kann der genannte Abstand aus einem zwischen einem Wendepunkt des skalierten Frequenzverlaufes und einem Fernbereich liegenden Frequenzwert des skalierten Frequenzverlaufs ermittelt werden. An einem solchen Punkt, der sowohl in einem Abstand zum Wendepunkt als auch in einem Abstand zu den Fernbereichen liegt, ist der Frequenzwert des skalierten Frequenzverlaufs selbst ein signifikantes Maß für den Abstand: Je größer der Frequenzwert, desto kleiner ist der Passageabstand, und umgekehrt. Dieses Kriterium erübrigt eine Differentiation des Frequenzverlaufs; da die Proportionalität jedoch nichtlinear ist, ist in der Regel eine Umrechnungstabelle zur Ermittlung des Passageabstands von Vorteil.

Eine weitere alternative Ausführungsform besteht darin, dass der genannte Abstand aus einem Integral des skalierten Frequenzverlaufes über einen zwischen seinem Wendepunkt und einem Fernbereich liegenden Abschnitt des skalierten Frequenzverlaufs ermittelt wird. Auch das Integral des skalierten Frequenzverlaufs ist ein signifikantes Kriterium für den Passageabstand. So können die Frequenzwerte des skalierten Frequenzverlaufs z.B. zwischen dem Wendepunkt und einem der genannten Fernbereich aufintegriert werden, und das Integral ("Fläche unter der Kurve") ist ein - wenn auch nichtlineares - Maß für den Passageabstand: Je größer das Integral, desto kleiner ist der Passageabstand, und umgekehrt. Wieder ist eine Tabelle zur Umrechnung der nichtlinearen Proportionalität zwischen Integral und Passageabstand von Vorteil.

Gemäß einer besonders bevorzugten Ausgestaltung der Erfindung wird der Frequenzverlauf des Empfangssignals nur in dem hier interessierenden Bereich rund um den Doppler-Sprung aufgezeichnet, um Speicherkapazität, Rechenleistung und Übertragungskanalressourcen einzusparen. In einer ersten bevorzugten Ausführungsform wird dazu das Aufzeichnen des Frequenzverlaufs gestartet, wenn die Stärke des empfangenen Signals einen Mindest-Schwellwert übersteigt, und beendet, wenn die Stärke des empfangenen Signals unter den Mindest-Schwellwert abfällt. Wenn das Signal ein intermittierendes, aus einzelnen Datenpaketen zusammengesetztes Signal ist, wie später noch näher erläutert wird, wird die Aufzeichnung bevorzugt erst dann beendet, wenn über eine vorgegebene Mindest-Zeitspanne, welche der maximal möglichen Signallücke zwischen zwei Datenpaketen des Signals entspricht, kein Signal mehr empfangen wird.

In einer weiteren Ausführungsform speziell für den Fall, dass das Signal von der Funkbake ausgesandt und vom Fahrzeuggerät empfangen wird, wird das Aufzeichnen des Frequenzverlaufs gestartet, wenn mittels eines Sensors des Fahrzeuggeräts eine Annäherung des Fahrzeuggeräts an eine Funkbake detektiert wird.

Besonders günstig ist es dabei, wenn der Sensor einen Satellitennavigationsempfänger zur Positionsbestimmung des Fahrzeuggeräts und eine Liste von vorgespeicherten Orten von Funkbaken umfasst und eine Annäherung an eine Funkbake detektiert wird, wenn die bestimmte Position in die Nähe eines gespeicherten Orts kommt, wodurch hohe Genauigkeit und Zuverlässigkeit der Triggerung der Aufzeichnung des Frequenzverlaufs erreicht werden kann.

In einer dritten Ausführungsform speziell für den Fall, dass das Signal vom Fahrzeuggerät ausgesandt und von der Funkbake empfangen wird, wird das Aufzeichnen des Frequenzverlaufs gestartet, wenn mittels eines Sensors der Funkbake eine Annäherung eines Fahrzeuggeräts an die Funkbake detektiert wird.

Bevorzugt wird dabei als Sensor ein Sendeempfänger zur Funkabfrage von Fahrzeuggeräten verwendet, dessen Reichweite größer ist als die Empfangsreichweite der Funkbake für das genannte Signal. Beispielsweise kann dieser als Sensor verwendete Sendeempfänger ein DSRC-Sendeempfänger mit einer auf den Straßenverlauf ausgerichteten Richtantenne sein, welche einen Funkabdeckungsbereich von z.B. $\pm$ 10 bis 20 m um die Bake hat, wogegen der Sendeempfänger zur Doppler-Sprungauswertung ein WAVE-Sendeempfänger der Funkbake mit Rundstrahlcharakteristik ist, dessen Funkabdeckungsbereich z.B. einen Radius von 5 bis 10 m hat. Alternativ wäre also auch möglich, einen WAVE-Sendeempfänger mit größerer Reichweite als Sensor und einen DSRC-Sendeempfänger mit kleinerer Reichweite für die Doppler-Auswertung einzusetzen.

Das von der Funkbake ausgesandte Signal braucht nicht notwendigerweise kontinuierlich ausgesandt zu werden, es kann bevorzugt auch intermittierend ausgesandt und der Frequenzverlauf zeitdiskret für Zeitpunkte, zu denen das Signal empfangen wird, verarbeitet werden. Dadurch werden zeitdiskrete Abtastwerte des Frequenzverlaufs ermittelt; liegen genügend Abtastwerte in ausreichend kurzen Zeitabständen vor, kann daraus der Abstand mit hinreichender Genauigkeit bestimmt werden.

Bevorzugt wird aus dem ermittelten Abstand anschließend die Fahrspur einer mehrspurigen Straße bestimmt, auf welcher sich das Fahrzeug bewegt. Dadurch können Mautvergehen bei parallel passierenden Fahrzeugen eindeutig einer Fahrspur und dem bzw. den darauf befindlichen Fahrzeug(en) zugeordnet werden.

Die mit dem Verfahren der Erfindung ausgewertete Dopplerverschiebung kann an jeder beliebigen Frequenz des Signals gemessen werden, sei es eine Trägerfrequenz oder bevorzugt eine Modulationsfrequenz desselben. Unter Modulationsfrequenz wird eine Frequenz jeder beliebigen Modulation des OBU-Signals verstanden, sei es eine einfache Frequenz- oder Amplitudenmodulation, eine der Modulationsfrequenzen einer OFDM-Modulation, oder auch eine Puls- bzw. Burstmodulation, wie sie durch periodisches Übertragen von ganzen Datenblöcken auftritt; auch eine solche Blockwiederholungsrate kann als Modulationsfrequenz betrachtet werden, deren Dopplerfrequenzverschiebung gemessen werden kann.

Das Verfahren der Erfindung eignet sich für alle Arten von funkbakenbasierten Straßenmautsystemen. Besonders geeignet ist das Verfahren für DSRC- und WAVE-Straßenmautsysteme, bei welchen zum Aussenden des Signals ein DSRC- oder WAVE-Sender des Fahrzeuggerätes oder der Funkbake verwendet wird. Andere Ausführungen in RFID-Technologie, aber auch jegliche zellularen (z.B. GSM, UMTS, LTE) und Nahbereichs-Funktechnologien (z.B. Bluetooth, WLAN), sind ebenfalls möglich.

In einem zweiten Aspekt schafft die Erfindung auch eine Funkbake für ein Straßenmautsystem zum Ermitteln des Abstandes eines diese passierenden Fahrzeuges, welches mit einem Fahrzeuggerät ausgestattet ist, das ein Signal mit einem bekannten zeitlichen Verlauf seiner Frequenz aussendet, welche Funkbake sich auszeichnet durch:

einen Empfänger, welcher zum Empfangen des Signals eines passierenden Fahrzeuges ausgebildet ist;
einen an den Empfänger angeschlossenen Speicher, der zum Aufzeichnen des zeitlichen Verlaufes der Frequenz des empfangenen Signals relativ zum bekannten zeitlichen Verlauf ausgebildet ist;
einen an den Speicher angeschlossenen Detektor, welcher zum Detektieren einer einen ersten Schwellwert überschreitenden Änderung im aufgezeichneten Frequenzverlauf ausgebildet ist;
eine an den Detektor und den Speicher angeschlossene erste Auswerteeinrichtung, die zum Aufsuchen zweier zeitlich vor und nach der detektierten Änderung liegender Fernbereiche im Frequenzverlauf ausgebildet ist, welche eine Frequenzänderung unter einem zweiten Schwellwert zeigen;
einen an den Speicher und die erste Auswerteeinrichtung angeschlossenen Skalierer, der dazu ausgebildet ist, den aufgezeichneten Frequenzverlauf so zu skalieren, dass die Fernbereiche vorgegebene Werte annehmen; und
eine dem Skalierer nachgeschaltete zweite Auswerteeinrichtung, die zum Ermitteln des Abstands aus dem skalierten Frequenzverlauf ausgebildet ist.

Die Funkbake kann sowohl ortsfest an einer Straße angeordnet als auch mobil z.B. auf einem Kontrollfahrzeug des Straßenmautsystems montiert sein.

In einem dritten Aspekt schafft die Erfindung ein Fahrzeuggerät (OBU) für ein Straßenmautsystem zum Ermitteln des Abstandes zu einer Funkbake des Straßenmautsystems, die ein Signal mit einem bekannten zeitlichen Verlauf seiner Frequenz aussendet, welches sich auszeichnet durch einen Empfänger, welcher zum Empfangen des Signals einer Funkbake ausgebildet ist;

einen an den Empfänger angeschlossenen Speicher, der zum Aufzeichnen des zeitlichen Verlaufes der Frequenz des empfangenen Signals relativ zum bekannten zeitlichen Verlauf ausgebildet ist;
einen an den Speicher angeschlossenen Detektor, welcher zum Detektieren einer einen ersten Schwellwert überschreitenden Änderung im aufgezeichneten Frequenzverlauf ausgebildet ist;
eine an den Detektor und den Speicher angeschlossene Auswerteeinrichtung, die zum Aufsuchen zweier zeitlich vor und nach der detektierten Änderung liegender Fernbereiche im Frequenzverlauf ausgebildet ist, welche eine Frequenzänderung unter einem zweiten Schwellwert zeigen;
einen an den Speicher und die erste Auswerteeinrichtung angeschlossenen Skalierer, der dazu ausgebildet ist, den aufgezeichneten Frequenzverlauf so zu skalieren, dass die Fernbereiche vorgegebene Werte annehmen; und
eine dem Skalierer nachgeschaltete zweite Auswerteeinrichtung, die zum Ermitteln des Abstands aus dem skalierten Frequenzverlauf ausgebildet ist.

Hinsichtlich weiterer Merkmale und Vorteile der erfindungsgemäßen Funkbake und des erfindungsgemäßen Fahrzeuggeräts wird auf die obigen Ausführungen zum Verfahren verwiesen.

Die Erfindung wird nachstehend anhand von bevorzugten Ausführungsbeispielen unter Bezugnahme auf die begleitenden Zeichnungen näher erläutert, in denen zeigt:

Fig. 1 eine Funkbake an einer mehrspurigen Straße und die geometrischen Verhältnisse bei der Passage zweier Fahrzeuge schematisch in der Draufsicht;
Fig. 2 die Frequenzverläufe der Signale zweier Fahrzeuge bei der Passage der Funkbake;
Fig. 3 die Frequenzverläufe von Fig. 2 nach ihrer Skalierung;
Fig. 4 die Differentiale der skalierten Frequenzverläufe von Fig. 3;
Fig. 5 ein Blockschaltbild der Funkbake bzw. des Fahrzeuggeräts der Erfindung;
die Fig. 6 und 7 alternative Auswertungsverfahren für die skalierten Frequenzverläufe von Fig. 3;
die Fig. 8a und 8b Varianten der zweiten Auswerteeinrichtung der Funkbake bzw. des Fahrzeuggeräts von Fig. 5 zur Implementierung der Verfahren der Fig. 6 und 7;
Fig. 9 eine Variante der Erfindung auf Basis intermittierend ausgesandter Signale und entsprechend intermittierender Frequenzverläufe;
Fig. 10 einen Ausschnitt des Blockschaltbilds von Fig. 5 mit einer ersten Variante zur Steuerung der Frequenzverlaufaufzeichnung;
Fig. 11 einen Ausschnitt des Blockschaltbilds von Fig. 5 mit einer zweiten Variante zur Steuerung der Frequenzverlaufaufzeichnung; und
Fig. 12 eine dritte Variante der Erfindung zur Steuerung der Frequenzverlaufaufzeichnung anhand eines Ausschnitts von Fig. 1.

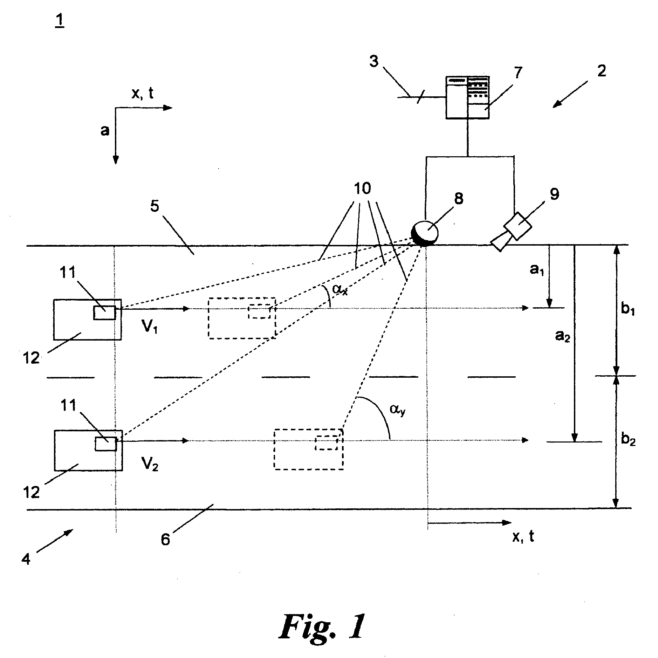

In Fig. 1 ist ein Straßenmautsystem 1 gezeigt, das eine Vielzahl geografisch verteilter Funkbaken 2 umfasst (nur eine stellvertretend gezeigt), die über Datenverbindungen 3 mit einer (nicht gezeigten) Zentrale des Straßenmautsystems 1 in Verbindung stehen. Die Funkbaken 2 sind jeweils an einer Straße 4 postiert, welche mehrere Fahrbahnen bzw. Fahrspuren 5, 6 umfassen kann.

Die Funkbake 2 setzt sich beispielsweise aus einem lokalen Rechner 7, einem (Sende-)Empfänger 8 und einer Kamera 9 zusammen, die zur Ahndung von Mautvergehen - vom Rechner 7 angesteuert - Bilder der Straße 4 mit ihren Fahrspuren 5, 6 aufnehmen kann.

Der (Sende-)Empfänger 8 dient zur Durchführung von Funkkommunikationen 10 mit Fahrzeuggeräten bzw. OBUs (onboard units) 11, die von Fahrzeugen 12 mitgeführt werden, welche auf den Fahrspuren 5, 6 die Funkbake 2 passieren. Die Funkkommunikationen 10 sind in der Regel bidirektionale Datenpaketverbindungen. In einer ersten Ausführungsform der Erfindung ist eine Analyse der von den OBUs 11 zum (Sende-)Empfänger 8 der Funkbake 2 gesandten Signale ausreichend, so dass im Weiteren nur davon gesprochen wird, dass die OBU 11 Signale 10 an den Empfänger 8 der Funkbake 2 sendet; in später erörterten Ausführungsformen werden auch Signale 10 in der umgekehrten Richtung analysiert.

Es versteht sich, dass die Funkbake 2 nicht notwendigerweise ortsfest sein muss, sondern auch selbst von einem Fahrzeug mitgeführt sein kann, beispielsweise von einem Kontrollfahrzeug, welches Fahrzeuge 12 mit OBUs 11 im fließenden Verkehr passiert bzw. von diesen passiert wird.

Die Fahrzeuge 12 mit den OBUs 11 bewegen sich auf den Fahrspuren 5, 6 mit unterschiedlichen Geschwin-digkeiten $v_1$, $v_2$ in unterschiedlichen Passage bzw. Normalabständen $a_1$, $a_2$ an der Funkbake 2, genauer an ihrem Empfänger 8, vorbei. Die von den OBUs 11 ausgesandten Signale 10 unterliegen dabei jeweils frequenzabhängigen Dopplerverschiebungen gemäß der bekannten Formel

$$f_D = \frac{f_S}{1 - \dfrac{v}{c}} \qquad\qquad (1)$$

mit

$f_S$   Sendefrequenz des Signals 10 der OBU 11;
$f_D$   dopplerverschobene Empfangsfrequenz des Signals 10 in der Funkbake 2, wenn sich die OBU 11 darauf frontal zubewegen würde;
$v$   Geschwindigkeit der OBU 11; und
$c$   Lichtgeschwindigkeit.

Wenn sich die OBU 11 in einem Abstand a an die Funkbake 2 vorbeibewegt, kann Gleichung (1) mittels geometrischer Überlegungen geschrieben werden als

$$f_B \equiv \cos\left[\arctan\left(\frac{a}{x}\right)\right] f_D \qquad\qquad (2)$$

mit

a   Vertikalabstand der OBU 11 zur Funkbake 2 in dem Ko-ordinatensystem von Fig. 1;
x   Horizontalabstand der OBU 11 zur Funkbake 2 in dem Koordinatensystem von Fig. 1; unter der Annahme einer konstanten Geschwindigkeit v bzw. $v_1$, $v_2$ der OBUs 11 entspricht der Horizontalabstand auch gleichzeitig der Zeit t; und
$f_B$   dopplerverschobene Empfangsfrequenz des Signals 10 in der Funkbake 2, wenn sich die OBU 11 mit dem Abstand a daran vorbeibewegt.

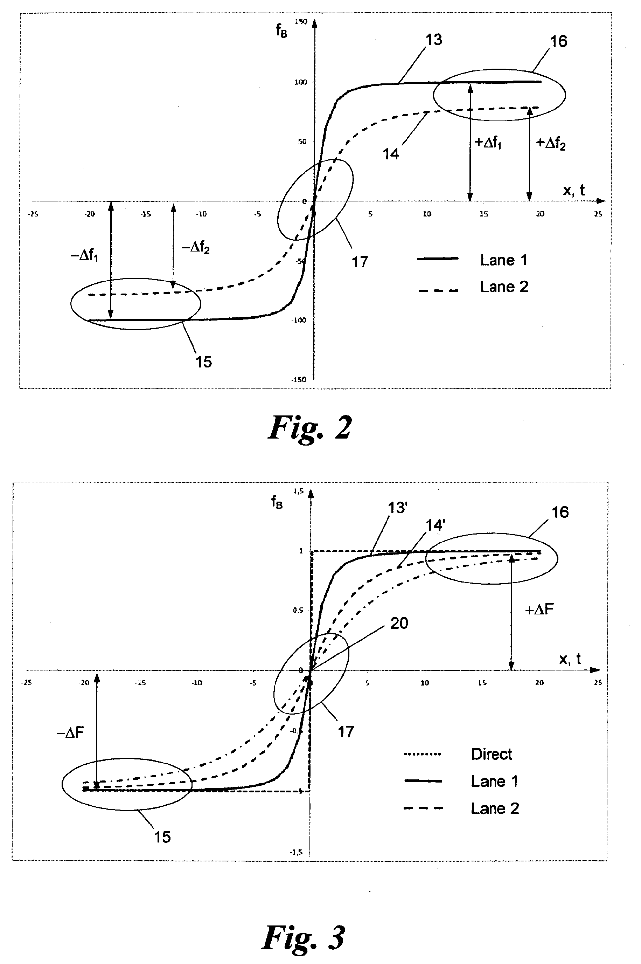

Fig. 2 zeigt zwei beispielhafte Verläufe der Empfangsfrequenz $f_B$ über dem Horizontalabstand x bzw. der Zeit t. Die durchgezogene Linie 13 zeigt den Empfangsfrequenzverlauf für die OBU 11 auf der Fahrspur 5 und die strichlierte Linie 14 jene für die OBU 11 auf der Fahrspur 6. Wie ersichtlich ist die dopplerbedingte Frequenzverschiebung $\pm\Delta f_1$, $\pm\Delta f_2$ in "Fernbereichen" 15, 16 der Frequenzverläufe 13, 14 weit vor und nach einem Bereich 17 maximaler Änderung $f_B' = \partial f_B/\partial t$ gering, d.h. in den Fernbereichen 15, 16 liegt die Frequenzänderung $f_B'$ unter einem Signifikanzschwellwert $\varepsilon$.

In den Fernbereichen 15, 16 (und natürlich auch weiter außerhalb derselben) hängt das Ausmaß der Doppler-verschiebung $\pm\Delta f$ somit kaum mehr vom Passageabstand a sondern fast ausschließlich von der Geschwindigkeit v ab. Der Effekt der Fahrzeuggeschwindigkeit v auf die Frequenzverläufe 13, 14 kann daher eliminiert werden, indem diese so skaliert werden, dass sie in den Fernbereichen 15, 16 jeweils denselben Wert annehmen, z.B. einen vorgegebenen Wert $\pm\Delta F$.

Fig. 3 zeigt das Ergebnis einer solchen Skalierung, bei der die aufgezeichneten Frequenzverläufe 13, 14 so skaliert ("normiert") wurden, dass sie in den Fernbereichen 15, 16 die vorgegebenen Werte $\pm\Delta F$ annehmen.

Die skalierten Frequenzverläufe 13', 14' hängen somit nur mehr vom Verhältnis a/x, d.h. des Passageabstands a zum Horizontalabstand x bzw. zur Zeit t, ab gemäß

$$f_B \equiv \cos\left[\arctan\left(\frac{a}{x}\right)\right] f_s \qquad (3)$$

Wie aus Fig. 3 ersichtlich, unterscheiden sich die skalierten Frequenzverläufe 13', 14' besonders deutlich in ihrer Steigung $f_B' = \partial f_B/\partial t$ am Ort x = t = 0, an dem ihre Kurve gleichzeitig einen Wendepunkt 20 zeigt: Je größer der Passageabstand a, desto "verschliffener" ist der skalierte Frequenzverlauf 13', 14', d.h. desto geringer ist die Steigung $f_B'$ am Wendepunkt 20. Der Passageabstand a ist somit umgekehrt proportional zur Steigung $f_B'$, d.h.

$$\frac{1}{a} \equiv \lim_{x \to 0} f_B'(x) \qquad (4)$$

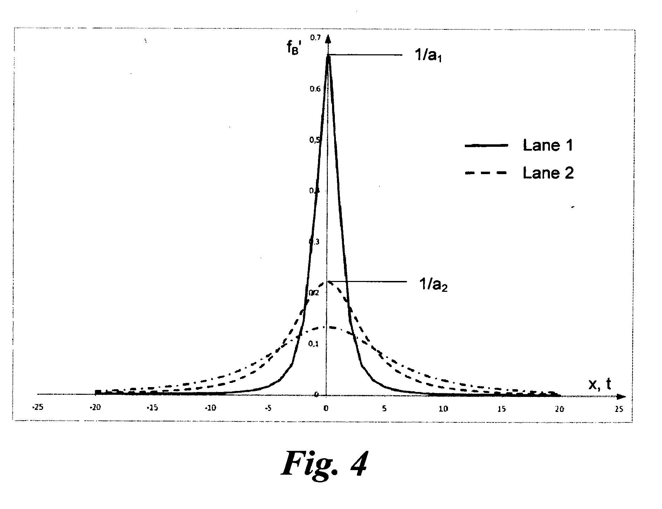

Die Steigung $f_B'$ im Wendepunkt 20 lässt sich durch Differenzieren der skalierten Frequenzverläufe 13', 14' ermitteln, und das Ergebnis der Differentiation ist in Fig. 4 gezeigt.

Aus den so ermittelten Passageabständen $a_1$, $a_2$ kann anschließend - in Kenntnis der Spurbreite $b_1$, $b_2$ der Fahrspuren 5, 6 - die jeweilige Fahrspur 5, 6 ermittelt werden, auf der sich die OBU 11 bei der Aussendung ihres Signals 10 befand. Oft reicht auch ein einfacher relativer Vergleich der Passageabstände $a_1$, $a_2$ aus, um die örtliche Abfolge der Fahrzeuge zu bestimmen.

Bislang wurde davon ausgegangen, daß die Sendefrequenz $f_s$ des Signals 10 der OBU 11 konstant ist, d.h. ihr eigener zeitlicher Verlauf ein konstanter Verlauf ist. Es ist jedoch auch möglich, daß die OBU 11 ein Signal 10 mit einem zeitlich nichtkonstanten Sendefrequenzverlauf aussendet, beispielsweise im Falle von Frequency-Hopping-Funk-ommunikationen, bei denen die Sendefrequenz $f_S$ ständig - nach einem vorgegebenen bzw. bekannten Muster - wechselt. Die aufgezeichneten Empfangsfrequenzverläufe 13, 14 werden relativ zu dem vorbekannten zeitlichen Verlauf der Sendefrequenz $f_S$ der OBU 11 - sei er konstant oder wechselnd - aufgezeichnet, d.h. auf diesen referenziert bzw. normiert, so daß der Effekt von bekannten Sendefrequenzänderungen der OBU 11 kompensiert werden kann.

Das Verfahren zum Bestimmen des Passageabstands a der die Funkbake 2 passierenden OBUs 11 gestaltet sich daher wie folgt:

Zunächst wird der Frequenzverlauf 13, 14 des Signals 10 der OBU 11 - gegebenenfalls relativ auf einen vorbekannten zeitlichen Verlauf der Sendefrequenz $f_s$ bezogen - über der Zeit t (= x) aufgezeichnet. Anschließend wird im Frequenzverlauf 13, 14 jener Bereich 17 näherungsweise bestimmt, zu dem überhaupt eine signifikante Änderung auftritt, d.h. $\partial f_B/\partial t$ einen vorgegebenen Detektionsschwellwert $\sigma$ ("erster Schwellwert") übersteigt. Dies dient dazu, einen zeitlichen Anhaltspunkt für das Aufsuchen der beiden Fernbereiche 15, 16 zu erhalten, welche vor und nach der Änderung 17 und von dieser so weit entfernt liegen müssen, dass in ihnen keine signifikante Frequenzänderung $\partial f_B/\partial t$ mehr auftritt, d.h. diese unterhalb eines vorgegebenen Signifikanzschwellwerts $\varepsilon$ ("zweiter Schwellwert") liegt.

In Kenntnis der Fernbereiche 17, 18 und der in diesen auftretenden Dopplerverschiebungen $\pm\Delta f_1$, $\pm\Delta f_2$ (welche, weil ihre Änderung den Signifikanzschwellwert $\varepsilon$ nicht überschreitet, auch als quasi-konstant betrachtet werden können), können die Frequenzverläufe 13, 14 nun so skaliert werden, dass sie in ihren Fernbereichen 15, 16 jeweils denselben

vorgegebenen Wert $\pm \Delta F$ annehmen.

Anschließend wird der Wendepunkt 20 in den skalierten Frequenzverläufen 13', 14' gesucht. Dazu wird jener Ort x bzw. jene Zeit t in den Frequenzverläufen gesucht, zu dem bzw. zu der die Empfangsfrequenz $f_B$ entweder den Frequenzmittelwert (die "Mitte") zwischen den "quasi-konstanten" Fernbereichen 15, 16 oder - wenn die Nennfrequenz des Signals 10 der ruhenden OBU 11 bekannt ist - diese Nennfrequenz einnimmt. Auf beide Arten kann der Wendepunkt 20 bestimmt werden, u.zw. sowohl vor der Skalierung in den Frequenzverläufen 13, 14 als auch nach der Skalierung in den skalierten Frequenzverläufen 13', 14'.

Nach Bestimmung des Wendepunkts 20 kann nun die Steigung $f_B'(x = t = 0)$ der skalierten Frequenzverläufe 13', 14' im Wendepunkt 20 bestimmt (siehe Fig. 4) und daraus der Passageabstand a bzw. $a_1$, $a_2$) ermittelt werden, wie oben erläutert.

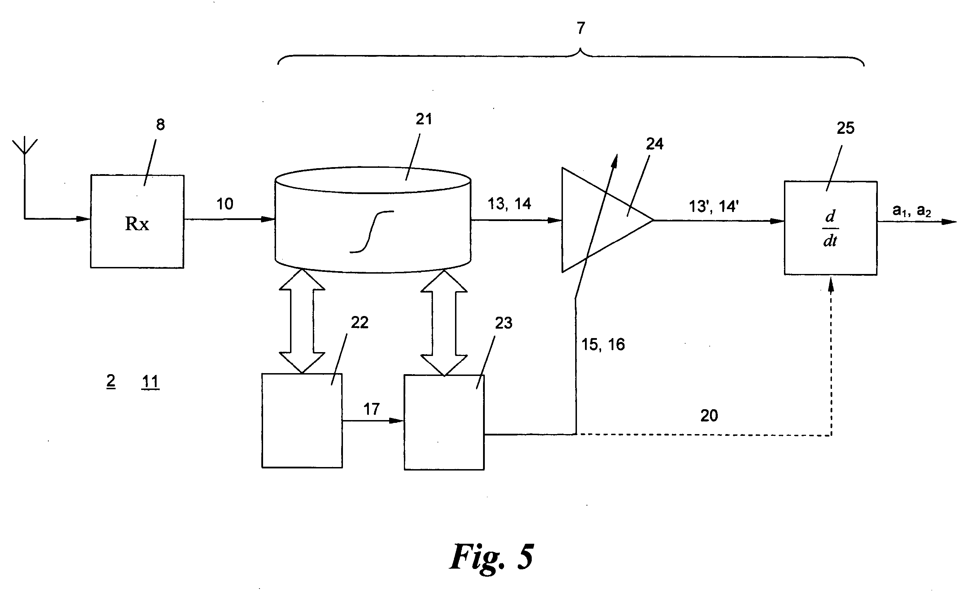

Fig. 5 zeigt eine beispielhafte Hardwarerealisierung der Funkbake 2 zur Durchführung des geschilderten Verfahrens. Im Anschluss an den Empfänger 8 verfügt die Funkbake 2 über einen Speicher 21, in dem die zeitlichen Frequenzverläufe 13, 14 der empfangenen Signale 10 aufgezeichnet werden. Ein an den Speicher 21 angeschlossener Detektor 22 detektiert den Änderungsbereich 17 ($\partial f_B/\partial t > \sigma$) und führt diese Information 17 einer Auswerteeinrichtung 23 zu. Die Auswerteeinrichtung 23 ermittelt daraus die Fernbereiche 15, 16 der Frequenzverläufe 13, 14 mit $\partial f_B/\partial t < \varepsilon$ und steuert mit dieser Information 15, 16 einen Skalierer 24 an, der die Frequenzverläufe 13, 14 zu skalierten Frequenzverläufen 13', 14' skaliert. Letztere werden einem Differenzierer 25 zugeführt, welcher die Steigung $f_B'(0) = \partial f_B/\partial t$ am Ort x = t = 0 ihres Wendepunkts 20 berechnet, um daraus die Passageabstände $a_1$, $a_2$ zu ermitteln.

Die Komponenten 21 - 25 können beispielsweise durch den lokalen Rechner 8 der Funkbake 2 implementiert werden.

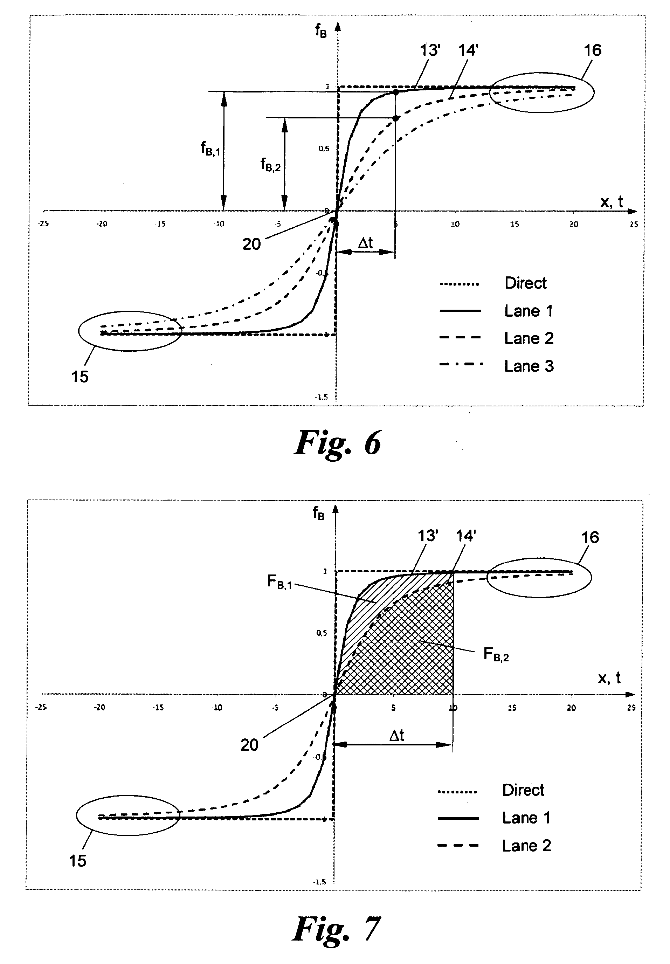

Die Fig. 6 und 7 zeigen alternative Ausführungsformen des soweit geschilderten Verfahrens, welche sich in dem Schritt des Ermittelns des Passageabstands a aus dem skalierten Frequenzverlauf 13', 14' unterscheiden: Wie oben erläutert, ist die Auswertung der Steigung $f_B'$ des skalierten Frequenzverlaufs 13', 14' im Wendepunkt 20 zwar ein besonders aussagekräftiges Kriterium für den Passageabstand a, doch können stattdessen auch andere signalanalytische Parameter des skalierten Frequenzverlaufs 13', 14' ausgewertet werden.

Fig. 6 zeigt eine erste Variante, bei welcher die Frequenzwerte $f_{B,1}$ bzw. $f_{B,2}$ der skalierten Frequenzverläufe 13', 14' an einem *zwischen* dem Wendepunkt 20 (x = t = 0) und einem der Fernbereiche 15, 16 liegenden Ort $\Delta x = \Delta t$ ausgewertet werden, d.h. $f_{B,1}(\Delta t)$ bzw. $f_{B,2}(\Delta t)$. Der Ort $\Delta x = \Delta t$ kann beispielsweise auf halbem Weg zwischen dem Wendepunkt 20 und einem der Fernbereiche 15 oder 16 gewählt werden.

Aus dem entsprechenden Frequenzwert $f_{B,1}(\Delta t)$ bzw. $f_{B,2}(\Delta t)$ kann dann auf den jeweiligen Passageabstand $a_1$, $a_2$ geschlossen werden: Je größer der Frequenzwert $f_B$ am vorgegebenen Ort $\Delta t$, desto kleiner ist der Passageabstand a. In Testreihen kann der zu einem bestimmten Passageabstand a zugehörige Frequenzwert $f_B$ des skalierten Frequenzverlaufs 13', 14' ermittelt und z.B. in einer Datenbank oder Tabelle gespeichert werden, auf welche dann bei der Messung zugegriffen wird, um aus einem Frequenzwert $f_B$ den jeweiligen Passageabstand a zu ermitteln.

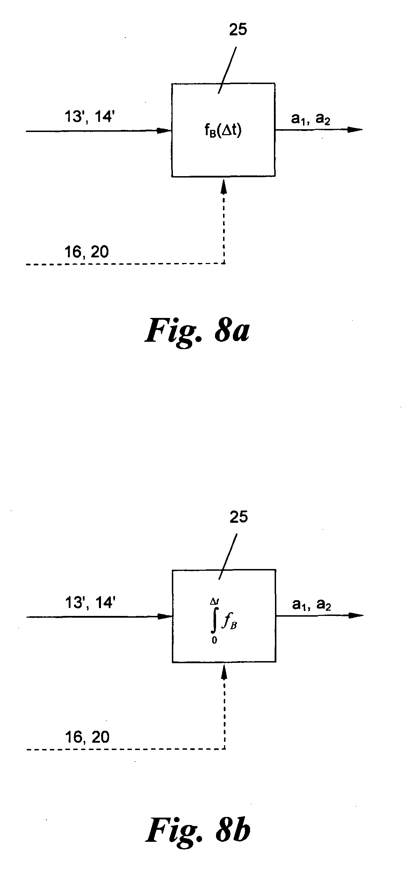

Fig. 8a zeigt eine hiefür abgewandelte zweite Auswerteeinrichtung 25 der Funkbake 2 von Fig. 5. Die zweite Auswerteeinrichtung 25 ist hier nicht als Differenzierer, sondern als Abtastglied ausgebildet, welches einfach den Funktionswert $f_B$ am vorgegebenen Ort $\Delta t$ des skalierten Frequenzverlaufs 13', 14' entnimmt, wobei der Ort $\Delta t$ zwischen dem Wendepunkt 20 und einem Fernbereich, z.B. dem Fernbereich 16, gewählt wird.

Fig. 7 zeigt noch eine weitere Möglichkeit der Auswertung der skalierten Frequenzverläufe 13', 14' durch Berechnen von Integralen derselben. Die Integrale der skalierten Frequenzverläufe 13', 14' vom Wendepunkt 20 bis zu einem vorgegebenen Ort $\Delta x = \Delta t$ entsprechen den in Fig. 7 schraffiert dargestellten Flächen $F_{B,1}$ für den skalierten Frequenzverlauf 13' bzw. $F_{B,2}$ für den skalierten Frequenzverlauf 14'. Wie ersichtlich, sind die Integrale $f_B(\Delta t)$ je nach Passageabstand a unterschiedlich. Je kleiner der Passageabstand a, desto größer ist das Integral bzw. die Fläche $F_B$. Wieder können durch Testreihen für verschiedene Passageabstände a die jeweils dazu auftretenden Flächen bzw. Integrale $F_B$ ermittelt und in einer Tabelle oder Datenbank vorgespeichert werden, sodass später im Messbetrieb aus einem gemessenen Integralwert $F_B$ der jeweils zugehörige Passageabstand a ermittelt werden kann.

Die Integrationsgrenzen der Integrale $F_B$ können dabei jeweils vom Wendepunkt 20 (x = t = 0) bis zu einem Punkt $\Delta x = \Delta t$ zwischen dem Wendepunkt 20 und einem der Fernbereiche 15, 16 gewählt werden, oder auch vom Wendepunkt 20 bis hin zu einem Fernbereich 15, 16. Als untere Integrationsgrenze kann anstelle des Wendepunkts 20 auch ein davon beabstandeter Punkt gewählt werden, der vor einem der Fernbereiche 15, 16 liegt.

Fig. 8b zeigt eine beispielhafte Realisierung einer zweiten Auswerteeinrichtung 25 für die Funkbake 2 von Fig. 5, welche durch ein Integrierglied gebildet ist. Das Integrierglied 25 führt die Integration der skalierten Frequenzbereiche 13', 14' zwischen den genannten Integrationsgrenzen aus, z.B. dem Wendepunkt 20 und einem Fernbereich 16, um daraus - beispielsweise anhand einer Datenbanktabelle - den jeweiligen Passageabstand $a_1$, $a_2$ zu ermitteln.

In einer weiteren Ausführungsform der Erfindung kann das gesamte bislang beschriebene Verfahren zur Bestimmung des Abstands a auch in der OBU 11 durchgeführt werden, u.zw. auf Grundlage einer Auswertung von Signalen 10, die sie von der Funkbake 2 empfängt. Die Fig. 5 und 8 zeigen demgemäß gleichzeitig eine beispielhafte Hardwarerealisierung einer OBU 11 zur Durchführung dieser Verfahrensvariante, und die Komponenten 7, 8, 21 - 25 sind dementsprechend interne Komponenten einer OBU 11.

Auch ist es möglich, dass sowohl die Funkbake 2 als auch die OBU 11 den Abstand zur jeweils anderen Komponente 11 bzw. 2 nach dem geschilderten Verfahren bestimmen. Die Empfänger 8 von Bake 2 und OBU 11 können dann als Sendeempfänger ausgeführt sein und die Funkbake 2 kann optional der OBU 11 den von ihr ermittelten Abstand a und/oder die OBU 11 optional der Funkbake 2 den von ihr ermittelten Abstand a zur Gegenprüfung mit dem jeweils dort ermittelten Abstand a senden.

In gleicher Weise können Funkbake 2 und OBU 11 auch eine auf Grundlage des ermittelten Abstands a bestimmte Information über die jeweilige Fahrspur 5, 6, auf der sich das Fahrzeug 12 mit der OBU 11 befindet, austauschen bzw. mitteilen. Die Information über die Fahrspur 5, 6 ist beispielsweise nützlich, wenn eine fahrspurabhängige Maut eingehoben oder eine ungerechtfertigte Benutzung einer Fahrspur geahndet werden soll: Sog. "HOT-Lanes" (high occupancy toll lanes) sind beispielsweise für Fahrzeuge mit einer bestimmten Mindestanzahl von Insassen (sog. high occupancy vehicles, HOVs) reserviert, können jedoch unter Zahlung einer z.B. insassenzahlabhängigen Maut (HOT-Gebühr) auch von Fahrzeugen mit weniger Insassen benützt werden. Wenn die OBU 11 die Fahrspur 5, 6 als Berechnungsgrundlage für eine HOT-Gebühr selbst ermittelt und der Funkbake 2 mitteilt, kann diese mittels ihrer eigenen Abstandmessung die korrekte Berechnung der HOT-Gebühr nachprüfen.

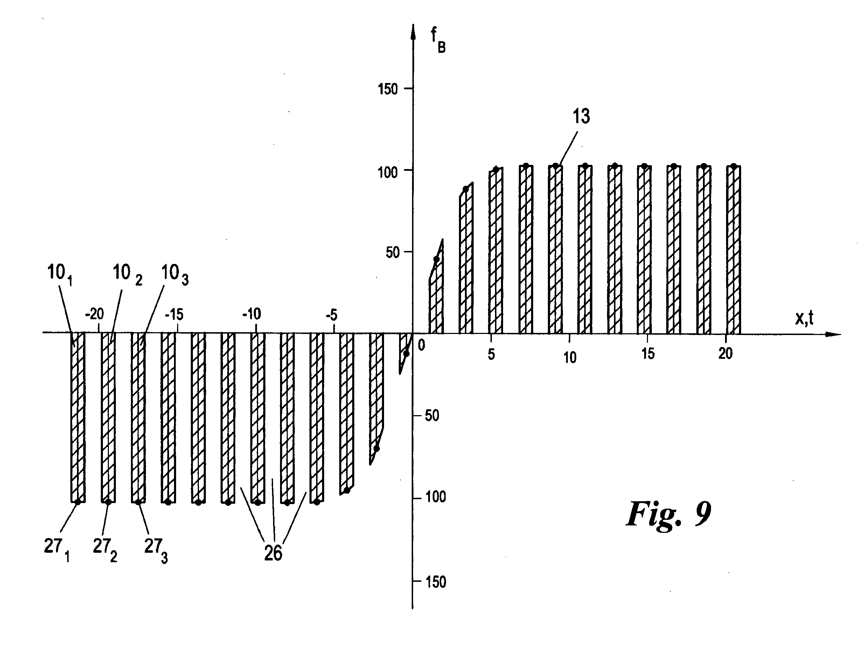

Fig. 9 zeigt eine weitere Variante der geschilderten Verfahren, Funkbaken und OBUs, bei welchen das Signal 10 nicht kontinuierlich bzw. dauernd während der gesamten hier interessierenden Zeitspanne der Passage vorliegt, sondern - aufgrund einer Aufteilung der Funkkommunikation in Datenpakete $10_1$, $10_2$, $10_3$ usw., allgemein $10_i$, - intermittierend vorliegt, d.h. von Lücken 26 unterbrochen ist. Die Empfangsfrequenz $f_B$ des Signals 10 im jeweiligen empfangenden Kommunikationspartner, sei es Funkbake 2 oder OBU 11, kann damit nur zu diskreten Zeitpunkten aufgezeichnet werden, so dass die Frequenzverläufe 13, 14 in Abtastwerte $27_1$, $27_2$, $27_3$ usw., allgemein $27_i$, zeitdiskretisiert (zeitlich abgetastet) sind.

Da auch die "ununterbrochene" Ausführungsform der Fig. 1 bis 4 bei Implementierung mit einem herkömmlich getakteten Prozessorsystem z.B. gemäß den Fig. 5 und 8 ein zeitdiskretes System mit einer Abtastrate entsprechend den Abtastraten der eingesetzten Analog/Digital-Wandler und Taktraten der eingesetzten Prozessoren darstellt, bedeutet dies gegenüber den vorgenannten Ausführungsformen lediglich eine Reduzierung der Genauigkeit im Ausmaß einer auf die Zeitpunkte $27_i$ reduzierten Abtastrate. Werden die Zeitpunkte $27_i$ entsprechend dicht gesetzt, ergibt sich eine entsprechend hohe Abtastrate für die zeitdiskretisierten Frequenzverläufe 13, 14, welche nur eine geringfügige Genauigkeitseinbuße bei der Bestimmung des Abstands a zur Folge hat.

Die intermittierenden Signale 10 der Ausführungsform von Fig. 9 können beispielsweise durch eine Folge von Datenpaketen $10_i$ gebildet werden, welche zwischen Funkbake 2 und OBU 11 nach dem DSRC- oder WAVE-Standard ausgetauscht werden. Nach dem DSRC-Standard sendet eine Funkbake 2 beispielsweise periodisch sog. "Beacon Service Table"-Nachrichten (BST), um die in ihren Funkabdeckungsbereich eintretenden OBUs 11 zu einer Antwort aufzufordern. In ähnlicher Weise kann eine Funkbake 2 nach dem WAVE-Standard wiederholt sog. "Wave Service Announcement"-Nachrichten (WSA) ausstrahlen, die von passierenden OBUs 11 aufgefangen werden können. Jede BST- bzw. WSA-Nachricht der Funkbake 2 bildet dann ein Datenpaket $10_i$ einer Folge, die von der OBU 11 als Signal 10 in der beschriebenen Art und Weise ausgewertet werden kann.

Umgekehrt kann eine Funkbake 2 wiederholte Datensendungen einer OBU 11 als Signal 10 auswerten. Da nach den DSRC- und WAVE-Standards OBUs 11 in der Regel nur auf Aufforderung durch eine Funkbake 2 antworten, sendet dazu die Funkbake 2 bevorzugt ein periodisch wiederholtes Abfragesignal aus, welches jeweils eine Antwort einer OBU 11 provoziert, z.B. eine periodische Folge von BST- oder WSA-Nachrichten oder von sog. "Echo-Nachrichten", welche von einer OBU 11 wiederholt werden. Auf diese Weise können OBUs 11 zur wiederholten Aussendung von Datenpaketen $10_i$ veranlasst werden, welche in der Funkbake 2 in der geschilderten Art und Weise ausgewertet werden können, um den Abstand a zu ermitteln.

In einer beispielhaften Ausführungsform mit einer Funkbake 2, deren Funkabdeckungsbereich in Fahrtrichtung der Straße 4 gesehen etwa 20 m vor und 20 m hinter die Bake reicht, d.h. ca. 40 m lang ist, und einem zeitlichen Abstand der Datenpakete $10_i$ von ca. 10 ms entsprechend einer Datenpaketsenderate von ca. 100 Hz befindet sich eine OBU 11 bei einer Fahrgeschwindigkeit von 10 kmh ca. 13 Sekunden im Funkabdeckungsbereich der Funkbake 2, so dass 1300 Datenpakete $10_i$ gesendet und damit 1300 Abtastwerte $27_i$ der Frequenzverläufe 13, 14 angefertigt werden können. Bei einer Fahrtgeschwindigkeit von ca. 130 kmh können immer noch ca. 100 Abtastwerte $27_i$ angefertigt werden, was eine ausreichende zeitliche Auflösung der Frequenzverläufe 13, 14 und damit eine ausreichende Genauigkeit der Bestimmung des Abstands a ergibt.

Wenn sowohl die Funkbake 2 als auch die OBU 11 jeweils den Abstand a bestimmen und die OBU 11 den von ihr ermittelten Abstand a an die Funkbake 2 zur Gegenprüfung sendet, können auch unterschiedliche Abtastraten für die Frequenzverläufe 13, 14 in der Bake 2 einerseits und der OBU 11 andererseits vorgesehen werden, insbesondere eine reduzierte Abtastrate auf Seiten der Bake 2, weil dies für die Validierung des von der OBU 11 mitgeteilten Abstands a genügt.

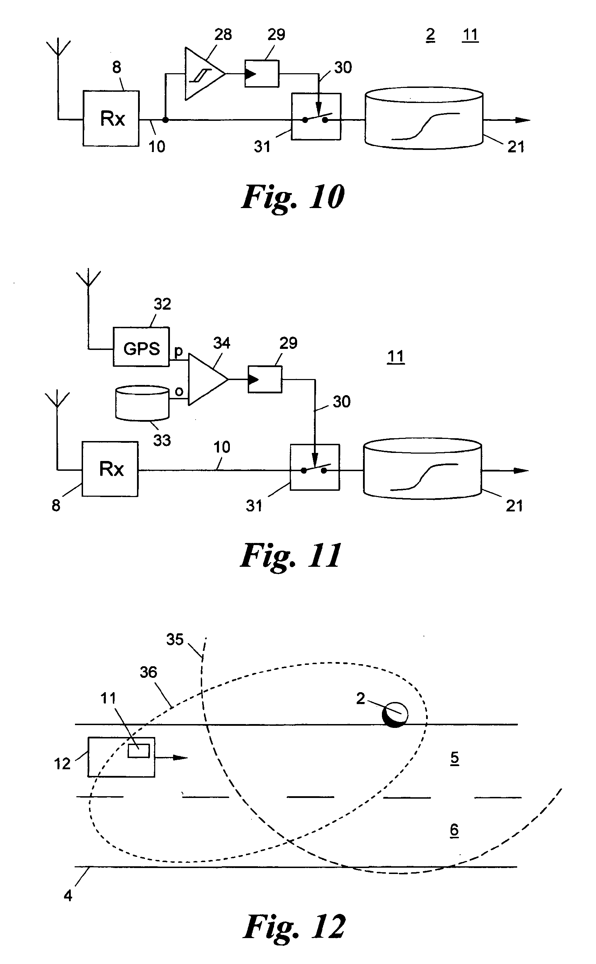

Wie eingangs erläutert, ist es besonders günstig, wenn die Frequenzverläufe 13, 14 nur in einem begrenzten zeitlichen Bereich rund um die Passage von Bake 2 und OBU 11 aufgezeichnet werden. Die Fig. 10 bis 12 zeigen drei verschiedene Ausführungsformen, wie eine entsprechende zeitliche Steuerung ("Triggerung") der Aufzeichnung des Empfangssignals 10 in dem Speicher 21 vorgenommen werden kann.

Die Ausführungsform von Fig. 10 kann sowohl in der Funkbake 2 als auch in der OBU 11 realisiert werden und beruht auf einer Auswertung der Empfangssignalstärke (received signal strength) des Signals 10, das in der Funkbake 2 bzw. OBU 11 vom jeweils anderen Kommunikationspartner empfangen wird. Zu diesem Zweck ist an den Empfänger 8 ein Pfad aus einem Schwellwertdetektor 28 mit nachgeschaltetem Zeitglied (Monoflop) 29 angeschlossen, welcher Pfad mit einem Steuersignal 30 einen Schalter 31 für die Aufzeichnung des Frequenzverlaufs 13, 14 im Speicher 21 steuert: Wenn die Stärke des empfangenen Signals 10 den Schwellwert des Schwellwertdetektors 28 übersteigt, wird mit der Aufzeichnung des Frequenzverlaufs 13, 14 begonnen (symbolisch der Schalter 31 "geschlossen"), und wenn die Signalstärke wieder unter den Schwellwert des Schwellwertdetektors 28 fällt, wieder beendet (symbolisch der Schalter 31 "geöffnet"). Das Monoflop 29 im Steuerpfad bewirkt, dass das Steuersignal 30 für den Schalter 31 jeweils über eine Zeitspanne ausgegeben wird, welche mindestens so groß ist wie die maximal mögliche Dauer der Lücken 26 in einem intermittierenden Signal 10 gemäß Fig. 9. Dadurch ist gewährleistet, dass Lücken 26 zwischen Datenpaketen $10_i$ des Signals 10 nicht zu einer Beendigung der Aufzeichnung führen, sondern die Aufzeichnung im Speicher 21 erst dann beendet wird, wenn für die Dauer der Haltezeit des Monoflops 29 kein Datenpaket $10_i$ mehr empfangen wird.

Es versteht sich, dass die in Fig. 10 gezeigten Hardware-Komponenten auch durch entsprechend programmierte Software-Komponenten der Funkbake 2 bzw. OBU 11 realisiert werden können.

Fig. 11 zeigt eine alternative Ausführungsform speziell für die OBU 11. Die OBU 11 ist hier zusätzlich mit einem Satellitennavigationsempfänger 32 ausgestattet, welcher fortlaufend die Position p der OBU 11 in einem Weltkoordinatensystem ausgibt. Eine Datenbank 33 in der OBU 11 enthält als Referenz eine Liste von vorgespeicherten Orten o aller Funkbaken 2 des Straßenmautsystems 1. Ein Map-Matcher 34 vergleicht fortlaufend die vom Satellitennavigationsempfänger 32 ermittelten Positionen p mit den vorgespeicherten Orten o und gibt - wenn die Position p in die Nähe eines Ortes o gelangt, z.B. innerhalb eines vorgegebenen Abstands - über das Monoflop 29 das Steuersignal 30 zum "Schließen" des Schalters 31 für die Aufzeichnung des Signals 10 im Speicher 21 aus.

Das Monoflop 29 wirkt hier wieder als Zeitglied, das die Aufzeichnung für die genannte Mindest-Zeitspanne startet. Das Monoflop 29 kann entfallen, wenn der Map-Matcher 34 dauernd das Steuersignal 30 ausgibt, solange die Position p in der Nähe eines Orts o ist.

Auch die in Fig. 11 gezeigten Hardware-Komponenten, wie insbesondere Datenbank 33, Map-Matcher 34, Monoflop 29 und symbolischer Schalter 31, können wieder durch entsprechende Software-Komponenten der OBU 11 realisiert werden.

Fig. 12 zeigt eine dritte Ausführungsform speziell für die Funkbake 2. Die Funkbake 2 wird hier mit einem zusätzlichen Sensor ausgestattet, welcher die Annäherung einer OBU 11 an den Funkabdeckungsbereich 35 des Sendeempfängers 8 der Funkbake 2 detektiert, um rechtzeitig die Aufzeichnung des Signals 10 im Speicher 21 zu starten, bevor (oder wenn) die OBU 11 in den Funkabdeckungsbereich 35 eintritt. Der Erfassungsbereich dieses Sensors ist mit 36 angedeutet.

Die beiden Bereiche 35 und 36 können beispielsweise durch entsprechende Antennencharakteristiken eingerichtet werden, wenn für den Sensor ebenfalls ein Funksendeempfänger verwendet wird. Beispielsweise kann die Funkbake 2 zwei verschiedene Sendeempfänger haben, u.zw. eine WAVE-Sendeempfänger 8 mit einer Rundstrahlcharakteristik im Bereich 35 zur Ermittlung und Aufzeichnung des Frequenzverlaufs 13, 14 im Speicher 21; und einen DSRC-Sendeempfänger zur Funkabfrage von OBUs 11 im Bereich 36, um deren Annäherung rechtzeitig zu detektieren und die Aufzeichnung im Bereich 35 zu veranlassen. Auch eine umgekehrte Variante ist möglich: Ein WAVE-Sendeempfänger mit größerer Reichweite 36, eventuell auch mit Rundstrahlcharakteristik, und ein DSRC-Funksendeempfänger 8 mit kleinerer Reichweite 35, eventuell auch mit Richtcharakteristik, wobei dann der WAVE-Sendeempfänger die Annäherungen der OBU 11 detektiert und die Aufzeichnung des Frequenzverlaufs 13, 14 durch den DSRC-Sendeempfänger veranlasst.

Die Erfindung ist nicht auf die dargestellten Ausführungsformen beschränkt, sondern umfasst alle Varianten und Modifikationen, die in den Rahmen der angeschlossenen Ansprüche fallen.

**Patentansprüche**

1.  Verfahren zum Ermitteln des Abstands (a) zwischen einer Funkbake (2) und einem sie passierenden Fahrzeuggerät (11) in einem Straßenmautsystem (1), wobei zumindest eine der beiden Komponenten Funkbake (2) und Fahrzeuggerät (11) ein Signal (10) mit einem bekannten zeitlichen Verlauf seiner Frequenz ($f_s$) aussendet, **gekennzeichnet durch** die Schritte:

    Empfangen des Signals (10) in der anderen der beiden Komponenten (2, 11) bei der Passage und Aufzeichnen des zeitlichen Verlaufes (13, 14) seiner Frequenz ($f_B$) relativ zum bekannten zeitlichen Verlauf;
Detektieren einer einen ersten Schwellwert ($\sigma$) überschreitenden Änderung (17) im aufgezeichneten Frequenzverlauf (13, 14);
Aufsuchen zweier zeitlich vor und nach der detektierten Änderung (17) liegender Fernbereiche (15, 16) im Frequenzverlauf (13, 14), welche eine Frequenzänderung ($f_B$') unter einem zweiten Schwellwert ($\varepsilon$) zeigen;
Skalieren des aufgezeichneten Frequenzverlaufes (13, 14) derart, dass die Fernbereiche (15, 16) vorgegebene Werte ($\pm\Delta F$) annehmen; und
Ermitteln des genannten Abstandes (a) aus dem skalierten Frequenzverlauf (13', 14').

2. Verfahren nach Anspruch 1, **dadurch gekennzeichnet, dass** der genannte Abstand (a) aus der Steigung ($f_B$') des skalierten Frequenzverlaufes (13', 14') in einem Wendepunkt (20) desselben ermittelt wird.

3. Verfahren nach Anspruch 1, **dadurch gekennzeichnet, dass** der genannte Abstand (a) aus einem zwischen einem Wendepunkt (20) des skalierten Frequenzverlaufes (13', 14') und einem Fernbereich (15, 16) liegenden Frequenzwert ($f_B$) des skalierten Frequenzverlaufs ermittelt wird.

4. Verfahren nach Anspruch 1, **dadurch gekennzeichnet, dass** der genannte Abstand (a) aus einem Integral ($F_B$) des skalierten Frequenzverlaufes (13', 14') über einen zwischen einem Wendepunkt (20) desselben und einem Fernbereich (15, 16) liegenden Abschnitt ($\Delta t$) ermittelt wird.

5. Verfahren nach einem der Ansprüche 1 bis 4, **dadurch gekennzeichnet, dass** das Aufzeichnen des Frequenzverlaufs (13, 14) gestartet wird, wenn die Stärke des empfangenen Signals (10) einen mindest-Schwellwert übersteigt, und beendet wird, wenn die Stärke des empfangenen Signals (10) - bevorzugt über eine Mindest-Zeitspanne - unter den Mindest-Schwellwert abfällt.

6. Verfahren nach einem der Ansprüche 1 bis 4, **dadurch gekennzeichnet, dass** das Signal (10) von der Funkbake (2) ausgesandt und vom Fahrzeuggerät (11) empfangen wird, wobei die genannten Schritte des Aufzeichnens, Detektierens, Aufsuchens, Skalierens und Ermittelns vom Fahrzeuggerät (11) durchgeführt werden, und wobei das Aufzeichnen des Frequenzverlaufs (13, 14) gestartet wird, wenn mittels eines Sensors (28 - 34) des Fahrzeuggeräts (11) eine Annäherung des Fahrzeuggeräts (11) an eine Funkbake (2) detektiert wird.

7. Verfahren nach Anspruch 6, **dadurch gekennzeichnet, dass** der Sensor einen Satellitennavigationsempfänger (32) zur Positionsbestimmung des Fahrzeuggeräts (11) und eine Liste (33) von vorgespeicherten Orten (o) von Funkbaken (2) umfasst und eine Annäherung an eine Funkbake (2) detektiert wird, wenn die bestimmte Position (p) in die Nähe eines gespeicherten Orts (o) kommt.

8. Verfahren nach einem der Ansprüche 1 bis 4, **dadurch gekennzeichnet, dass** das Signal (10) vom Fahrzeuggerät (11) ausgesandt und von der Funkbake (2) empfangen wird, wobei die genannten Schritte des Aufzeichnens, Detektierens, Aufsuchens, Skalierens und Ermittelns von der Funkbake (2) durchgeführt werden, und wobei das Aufzeichnen des Frequenzverlaufs (13, 14) gestartet wird, wenn mittels eines Sensors (28 - 31, 36) der Funkbake (2) eine Annäherung eines Fahrzeuggeräts (11) an die Funkbake (2) detektiert wird.

9. Verfahren nach Anspruch 8, **dadurch gekennzeichnet, dass** als Sensor ein Sendeempfänger (8) zur Funkabfrage von Fahrzeuggeräten (11) verwendet wird, dessen Reichweite (36) größer ist als die Empfangsreichweite (35) der Funkbake (2) für das genannte Signal (10).

10. Verfahren nach einem der Ansprüche 1 bis 9, **dadurch gekennzeichnet, dass** das Signal (10) intermittierend ausgesandt wird und der Frequenzverlauf (13, 14) zeitdiskret für Zeitpunkte ($27_i$), zu denen das Signal (10) empfangen wird, verarbeitet wird.

11. Verfahren nach einem der Ansprüche 1 bis 10, **dadurch gekennzeichnet, dass** aus dem Abstand (a) die Fahrspur (5, 6, 6') einer mehrspurigen Straße (4) bestimmt wird, auf welcher sich das Fahrzeug (12) bewegt.

12. Funkbake (2) für ein Straßenmautsystem (1) zum Ermitteln des Abstandes (a) eines diese passierenden Fahrzeuges (12), welches mit einem Fahrzeuggerät (11) ausgestattet ist, das ein Signal (10) mit einem bekannten zeitlichen Verlauf (13, 14) seiner Frequenz ($f_S$) aussendet, **gekennzeichnet durch**:

einen Empfänger (8), welcher zum Empfangen des Signals (10) eines passierenden Fahrzeuges (12) ausgebildet ist;

einen an den Empfänger angeschlossenen Speicher (21), der zum Aufzeichnen des zeitlichen Verlaufes (13, 14) der Frequenz ($f_B$) des empfangenen Signals (10) relativ zum bekannten zeitlichen Verlauf ausgebildet ist;

einen an den Speicher (21) angeschlossenen Detektor (22), welcher zum Detektieren einer einen ersten Schwellwert ($\sigma$) überschreitenden Änderung (17) im aufgezeichneten Frequenzverlauf (13, 14) ausgebildet ist;

eine an den Detektor (22) und den Speicher (21) angeschlossene erste Auswerteeinrichtung (23), die zum Aufsuchen zweier zeitlich vor und nach der detektierten Änderung (17) liegender Fernbereiche (15, 16) im Frequenzverlauf (14, 14) ausgebildet ist, welche eine Frequenzänderung ($f_B$') unter einem zweiten Schwellwert ($\varepsilon$) zeigen;

einen an den Speicher (21) und die erste Auswerteeinrichtung (23) angeschlossenen Skalierer (24), der dazu ausgebildet ist, den aufgezeichneten Frequenzverlauf (13, 14) so zu skalieren, dass die Fernbereiche (15, 16) vorgegebene Werte ($\pm\Delta F$) annehmen; und

eine dem Skalierer (24) nachgeschaltete zweite Auswerteeinrichtung (25), die zum Ermitteln des Abstands (a) aus dem skalierten Frequenzverlauf (13', 14') ausgebildet ist.

13. Funkbake nach Anspruch 12, **dadurch gekennzeichnet, dass** die zweite Auswerteeinrichtung (25) dafür ausgebildet ist, den genannten Abstand (a) aus der Steigung ($f_B$') des skalierten Frequenzverlaufes (13', 14') in einem Wendepunkt (20) desselben zu ermitteln.

14. Funkbake nach Anspruch 12, **dadurch gekennzeichnet, dass** die zweite Auswerteeinrichtung (25) dafür ausgebildet ist, den genannten Abstand (a) aus einem zwischen einem Wendepunkt (20) des skalierten Frequenzverlaufes (13', 14') und einem Fernbereich (15, 16) liegenden Frequenzwert ($f_B$) des skalierten Frequenzverlaufs zu ermitteln.

15. Funkbake nach Anspruch 12, **dadurch gekennzeichnet, dass** die zweite Auswerteeinrichtung (25) dafür ausgebildet ist, den genannten Abstand (a) aus einem Integral ($F_B$) des skalierten Frequenzverlaufes (13', 14') über einen zwischen einem Wendepunkt (20) desselben und einem Fernbereich (15, 16) liegenden Abschnitt ($\Delta t$) zu ermitteln.

16. Funkbake nach einem der Ansprüche 12 bis 15, **dadurch gekennzeichnet, dass** sie einen Sender (8) zum periodisch wiederholten Aussenden eines Abfragesignals aufweist, um passierende Fahrzeuggeräte (11) zur Abgabe jeweils eines Antwortsignals ($10_i$) aufzufordern, welche Antwortsignale ($10_i$) das genannte Signal (10) intermittierend bilden, wobei die Funkbake (2) den Frequenzverlauf (13, 14) zeitdiskret für Zeitpunkte ($27_i$), zu denen das Signal (10) vorliegt, verarbeitet.

17. Funkbake nach einem der Ansprüche 12 bis 16, **dadurch gekennzeichnet, dass** sie einen gesonderten Sensor zur Detektion der Annäherung eines Fahrzeugs (12) aufweist, welcher das Aufzeichnen des Frequenzverlaufs (13, 14) erst dann starten läßt, wenn er die Annäherung eines Fahrzeugs (12) detektiert.

18. Funkbake nach Anspruch 17, **dadurch gekennzeichnet, dass** der Sensor einen Sendeempfänger (8) zur Funkabfrage von Fahrzeuggeräten (11) umfasst, dessen Reichweite (36) größer ist als die Reichweite (35) des genannten Empfängers (8) für den Empfang des genannten Signals (10), bevorzugt einen Sendeempfänger mit einer Richtantenne.

19. Fahrzeuggerät für ein Straßenmautsystem zum Ermitteln des Abstandes (a) zu einer Funkbake (2) des Straßenmautsystems (1), die ein Signal (10) mit einem bekannten zeitlichen Verlauf seiner Frequenz aussendet, **gekennzeichnet durch**:

einen Empfänger (8), welcher zum Empfangen des Signals (10) einer Funkbake (2) ausgebildet ist;

einen an den Empfänger (8) angeschlossenen Speicher (21), der zum Aufzeichnen des zeitlichen Verlaufes (13, 14) der Frequenz ($f_B$) des empfangenen Signals (10) relativ zum bekannten zeitlichen Verlauf ausgebildet ist;

einen an den Speicher (21) angeschlossenen Detektor (22), welcher zum Detektieren einer einen ersten Schwellwert ($\sigma$) überschreitenden Änderung (17) im aufgezeichneten Frequenzverlauf (13, 14) ausgebildet ist;

eine an den Detektor (22) und den Speicher (21) angeschlossene erste Auswerteeinrichtung (23), die zum Aufsuchen zweier zeitlich vor und nach der detektierten Änderung (17) liegender Fernbereiche (15, 16) im Frequenzverlauf (13, 14) ausgebildet ist, welche eine Frequenzänderung ($f_B$') unter einem zweiten Schwellwert ($\varepsilon$) zeigen;

einen an den Speicher (21) und die erste Auswerteeinrichtung (23) angeschlossenen Skalierer (24), der dazu ausgebildet ist, den aufgezeichneten Frequenzverlauf (13, 14) so zu skalieren, dass die Fernbereiche (15, 16) vorgegebene Werte ($\pm\Delta F$) annehmen; und

eine dem Skalierer nachgeschaltete zweite Auswerteeinrichtung (25), die zum Ermitteln des Abstands (a) aus dem skalierten Frequenzverlauf (13', 14') ausgebildet ist.

20. Fahrzeuggerät nach Anspruch 19, **dadurch gekennzeichnet, dass** die zweite Auswerteeinrichtung (25) dafür ausgebildet ist, den genannten Abstand (a) aus der Steigung ($f_B$') des skalierten Frequenzverlaufes (13', 14') in einem Wendepunkt (20) desselben zu ermitteln.

21. Fahrzeuggerät nach Anspruch 19, **dadurch gekennzeichnet, dass** die zweite Auswerteeinrichtung (25) dafür ausgebildet ist, den genannten Abstand (a) aus einem zwischen einem Wendepunkt (20) des skalierten Frequenzverlaufes (13', 14') und einem Fernbereich (15, 16) liegenden Frequenzwert ($f_B$) des skalierten Frequenzverlaufs zu ermitteln.

22. Fahrzeuggerät nach Anspruch 19, **dadurch gekennzeichnet, dass** die zweite Auswerteeinrichtung (25) dafür ausgebildet ist, den genannten Abstand (a) aus einem Integral ($F_B$) des skalierten Frequenzverlaufes (13', 14') über einen zwischen einem Wendepunkt (20) desselben und einem Fernbereich (15, 16) liegenden Abschnitt ($\Delta t$) zu ermitteln.

23. Fahrzeuggerät nach einem der Ansprüche 19 bis 22, **dadurch gekennzeichnet, dass** es einen gesonderten Sensor (28 - 34) zur Detektion der Annäherung an eine Funkbake (2) aufweist, welcher das Aufzeichnen des Frequenzverlaufs (13, 14) erst dann starten läßt, wenn er die Annäherung an eine Funkbake (2) detektiert.

24. Fahrzeuggerät nach Anspruch 23, **dadurch gekennzeichnet, dass** der Sensor einen Satellitennavigationsempfänger (32) zur Positionsbestimmung des Fahrzeuggeräts (11) und eine Liste (33) von vorgespeicherten Orten (o) von Funkbaken (2) umfasst und dafür ausgebildet ist, eine Annäherung an eine Funkbake (2) zu detektieren, wenn die bestimmte Position (p) in die Nähe eines gespeicherten Orts (o) kommt.

**Claims**

1. Method for determining the distance (a) between a radio beacon (2) and an onboard unit (11) passing the beacon in a road toll system (1), wherein at least one of the two components, radio beacon (2) and onboard unit (11), emits a signal (10) with a known curve of its frequency ($f_s$) over time, **characterised by** the steps:

   receiving the signal (10) in the other of the two components (2, 11) during passage and recording the curve (13, 14) of its frequency ($f_B$) over time in relation to the known curve over time;
   detecting a change (17) in the recorded frequency curve (13, 14) exceeding a first threshold value ($\sigma$);
   looking for two far regions (15, 16) in the frequency curve (13, 14) lying before and after the detected change (17) in time that show a frequency change ($f_B$') below a second threshold value ($\varepsilon$);
   scaling the recorded frequency curve (13, 14) in such a manner that the far regions (15, 16) assume predetermined values ($\pm \Delta F$); and
   determining the said distance (a) from the scaled frequency curve (13', 14').

2. Method according to claim 1, **characterised in that** the said distance (a) is determined from the gradient ($f_B$') of the scaled frequency curve (13', 14') in an inflection point (20) thereof.

3. Method according to claim 1, **characterised in that** the said distance (a) is determined from a frequency value ($f_B$) of the scaled frequency curve lying between an inflection point (20) of the scaled frequency curve (13', 14') and a far region (15, 16).

4. Method according to claim 1, **characterised in that** the said distance (a) is determined from an integral ($F_B$) of the scaled frequency curve (13', 14') over a section (At) lying between an inflection point (20) thereof and a far region (15, 16).

5. Method according to one of claims 1 to 4, **characterised in that** the recording of the frequency curve (13, 14) is started when the strength of the received signal (10) exceeds a minimum threshold and is ended when the strength of the received signal (10) falls below the minimum threshold - preferably over a minimum time period.

6. Method according to one of claims 1 to 4, **characterised in that** the signal (10) is emitted by the radio beacon (2) and received by the onboard unit (11), wherein the said steps of recording, detecting, seeking, scaling and determining are conducted by the onboard unit (11), and wherein the recording of the frequency curve (13, 14) is started when an approach of the onboard unit (11) to a radio beacon (2) is detected by means of a sensor (28-34) of the onboard unit (11).

7. Method according to claim 6, **characterised in that** the sensor comprises a satellite navigation receiver (32) for determining the position of the onboard unit (11) and a list (33) of prestored locations (o) of radio beacons (2) and an approach to a radio beacon (2) is detected when the determined position (p) comes into the vicinity of a stored location (o).

8. Method according to one of claims 1 to 4, **characterised in that** the signal (10) is emitted by the onboard unit (11) and received by the radio beacon (2), wherein the said steps of recording, detecting, seeking, scaling and determining are conducted by the radio beacon (2), and wherein the recording of the frequency curve (13, 14) is started when an approach of an onboard unit (11) to the radio beacon (2) is detected by means of a sensor (28-31, 36) of the radio beacon (2).

9. Method according to claim 8, **characterised in that** a transceiver (8), the range (36) of which is greater than the receiving range (35) of the radio beacon (2) for the said signal (10), is used as sensor for radio interrogation of onboard units (11).

10. Method according to one of claims 1 to 9, **characterised in that** the signal (10) is emitted intermittently and the frequency curve (13, 14) is processed in a time-discrete manner for time points ($27_i$), at which the signal (10) is received.

11. Method according to one of claims 1 to 10, **characterised in that** the road lane (5, 6, 6') of a multi-lane road (4), in which the vehicle (12) is moving, is determined from the distance (a).

12. Radio beacon (2) for a road toll system (1) for determining the distance (a) of a vehicle (12) passing the radio beacon, which vehicle is equipped with an onboard unit (11), which emits a signal (10) with a known curve (13, 14) of its frequency ($f_s$) over time, **characterised by**:

a receiver (8), which is configured to receive the signal (10) of a passing vehicle (12);
a memory (21) connected to the receiver, which is configured to record the curve (13, 14) of the frequency ($f_B$) of the received signal (10) over time in relation to the known curve over time;
a detector (22), which is connected to the memory (21) and is configured to detect a change (17) in the recorded frequency curve (13, 14) exceeding a first threshold value ($\sigma$);
a first evaluation device (23), which is connected to the detector (22) and the memory (21) and is configured to look for two far regions (15, 16) in the frequency curve (13, 14) lying before and after the detected change (17) in time that show a frequency change ($f_B'$) below a second threshold value ($\varepsilon$);
a scaling device (24), which is connected to the memory (21) and the first evaluation device (23) and is configured to scale the recorded frequency curve (13, 14) in such a manner that the far regions (15, 16) assume predetermined values ($\pm\Delta F$); and
a second evaluation device (25), which is connected after the scaling device (24) and is configured to determine the distance (a) from the scaled frequency curve (13', 14').

13. Radio beacon according to claim 12, **characterised in that** the second evaluation device (25) is configured to determine the said distance (a) from the gradient ($f_B'$) of the scaled frequency curve (13', 14') in an inflection point (20) thereof.

14. Radio beacon according to claim 12, **characterised in that** the second evaluation device (25) is configured to determine the said distance (a) from a frequency value ($f_B$) of the scaled frequency curve lying between an inflection point (20) of the scaled frequency curve (13', 14') and a far region (15, 16).

15. Radio beacon according to claim 12, **characterised in that** the second evaluation device (25) is configured to determine the said distance (a) from an integral ($F_B$) of the scaled frequency curve (13', 14') over a section (At) lying between an inflection point (20) thereof and a far region (15, 16).

16. Radio beacon according to one of claims 12 to 15, **characterised in that** it has a transmitter (8) for the periodically repeated emission of a request signal in order to prompt passing onboard units (11) to respectively emit a response signal ($10_i$), which response signals ($10_i$) intermittently form the said signal (10), wherein the radio beacon (2) processes the frequency curve (13, 14) in a time-discrete manner for time points ($27_i$), at which the signal (10) is existent.

17. Radio beacon according to one of claims 12 to 16, **characterised in that** it has a separate sensor for detecting the approach of a vehicle (12), which only allows the recording of the frequency curve (13, 14) to be started when it detects the approach of a vehicle (12).

18. Radio beacon according to claim 17, **characterised in that** for radio interrogation of onboard units (11) the sensor comprises a transceiver (8), the range (36) of which is greater than the range (35) of the said receiver (8) for receiving the said signal (10), preferably a transceiver with a directional antenna.

19. Onboard unit for a road toll system for determining the distance (a) from a radio beacon (2) of the road toll system (1), which emits a signal (10) with a known curve of its frequency over time, **characterised by**:

a receiver (8), which is configured to receive the signal (10) of a radio beacon (2);
a memory (21) connected to the receiver (8), which is configured to record the curve (13, 14) of the frequency ($f_B$) of the received signal (10) over time in relation to the known curve over time;
a detector (22), which is connected to the memory (21) and is configured to detect a change (17) in the recorded frequency curve (13, 14) exceeding a first threshold value ($\sigma$);
a first evaluation device (23), which is connected to the detector (22) and the memory (21) and is configured to look for two far regions (15, 16) in the frequency curve (13, 14) lying before and after the detected change (17) in time that show a frequency change ($f_B'$) below a second threshold value ($\varepsilon$);
a scaling device (24), which is connected to the memory (21) and the first evaluation device (23) and is configured to scale the recorded frequency curve (13, 14) in such a manner that the far regions (15, 16) assume predetermined values ($\pm \Delta F$); and
a second evaluation device (25) connected after the scaling device, which is configured to determine the distance (a) from the scaled frequency curve (13', 14').

20. Onboard unit according to claim 19, **characterised in that** the second evaluation device (25) is configured to determine the said distance (a) from the gradient ($f_B'$) of the scaled frequency curve (13', 14') in an inflection point (20) thereof.

21. Onboard unit according to claim 19, **characterised in that** the second evaluation device (25) is configured to determine the said distance (a) from a frequency value ($f_B$) of the scaled frequency curve lying between an inflection point (20) of the scaled frequency curve (13', 14') and a far region (15, 16).

22. Onboard unit according to claim 19, **characterised in that** the second evaluation device (25) is configured to determine the said distance (a) from an integral ($F_B$) of the scaled frequency curve (13', 14') over a section (At) lying between an inflection point (20) thereof and a far region (15, 16).

23. Onboard unit according to one of claims 19 to 22, **characterised in that** it has a separate sensor (28-34) for detecting the approach to a radio beacon (2), which only allows the recording of the frequency curve (13, 14) to be started when it detects the approach to a radio beacon (2).

24. Onboard unit according to claim 23, **characterised in that** the sensor comprises a satellite navigation receiver (32) for determining the position of the onboard unit (11) and a list (33) of prestored locations (o) of radio beacons (2) and is configured to detect an approach to a radio beacon (2) when the determined position (p) comes into the vicinity of a stored location (o).

**Revendications**

1. Procédé pour la détermination de la distance (a) entre une balise (2) et un appareil de véhicule (11) passant devant celle-ci dans un système de péage routier (1), dans lequel au moins l'un des deux composants parmi la balise (2) et l'appareil de véhicule (11) émet un signal (10) avec une fréquence ($f_s$) présentant une courbe temporelle connue, **caractérisé par** les étapes suivantes :

réception du signal (10) dans l'autre des deux composants (2, 11) lors du passage et enregistrement de la courbe temporelle (13, 14) de sa fréquence ($f_B$) par rapport à la courbe temporelle connue ;

détection d'une modification (17) dépassant une première valeur seuil ($\sigma$) dans la courbe de fréquence (13, 14) enregistrée ;

recherche de deux plages lointaines (15, 16) situées avant et après la modification détectée (17) dans la courbe de fréquence (13, 14), lesquelles montrent une modification de fréquence ($f_B'$) en-dessous d'une deuxième valeur seuil ($\varepsilon$) ;

mise à l'échelle de la courbe de fréquence enregistrée (13, 14) de manière à ce que les plages lointaines (15, 16) adoptent des valeurs prédéfinies ($\pm\Delta F$) ; et

détermination de ladite distance (a) à partir de la courbe de fréquence mise à l'échelle (13', 14').

2. Procédé selon la revendication 1, **caractérisé en ce que** ladite distance (a) est déterminée à partir de la pente ($f_B'$) de la courbe de fréquence mise à l'échelle (13', 14'), dans un point d'inflexion (20) de celle-ci.

3. Procédé selon la revendication 1, **caractérisé en ce que** ladite distance (a) est calculée à partir d'une valeur de fréquence ($f_B$) de la courbe de fréquence mise à l'échelle située entre un point d'inflexion (20) de la courbe de fréquence mise à l'échelle (13', 14') et une plage lointaine (15, 16).

4. Procédé selon la revendication 1, **caractérisé en ce que** ladite distance (a) est calculée à partir d'une intégrale ($F_B$) de la courbe de fréquence mise à l'échelle (13', 14') sur une section ($\Delta t$) située entre un point d'inflexion (20) de celle-ci et une plage lointaine (15, 16).

5. Procédé selon l'une des revendications 1 à 4, **caractérisé en ce que** l'enregistrement de la courbe de fréquence (13, 14) commence lorsque la puissance du signal reçu (10) dépasse une valeur seuil minimale, et se termine lorsque la puissance du signal reçu (10) - de préférence sur une période minimale - tombe en-dessous de la valeur seuil minimale.

6. Procédé selon l'une des revendications 1 à 4, **caractérisé en ce que** le signal (10) est émis par la balise (2) et reçu par l'appareil de véhicule (11), dans lequel lesdites étapes d'enregistrement, de détection, de recherche, de mise à l'échelle et de détermination sont exécutées par l'appareil de véhicule (11), et dans lequel l'enregistrement de la courbe de fréquence (13, 14) commence lorsqu'il est détecté, au moyen d'un capteur (28 - 34) de l'appareil de véhicule (11), que l'appareil de véhicule (11) se rapproche d'une balise (2).

7. Procédé selon la revendication 6, **caractérisé en ce que** le capteur comprend un récepteur de navigation par satellite (32) pour déterminer la position de l'appareil de véhicule (11) et une liste (33) d'emplacements préenregistrés (o) de balises (2), et une approche d'une balise (2) est détectée lorsque la position déterminée (p) se trouve à proximité d'un emplacement enregistré (o).

8. Procédé selon l'une des revendications 1 à 4, **caractérisé en ce que** le signal (10) est émis par l'appareil de véhicule (11) et reçu par la balise (2), dans lequel lesdites étapes d'enregistrement, de détection, de recherche, de mise à l'échelle et de détermination sont exécutées par la balise (2), et dans lequel l'enregistrement de la courbe de fréquence (13, 14) commence lorsqu'il est détecté, au moyen d'un capteur (28 - 31, 36) de la balise (2), qu'un appareil de véhicule (11) se rapproche de la balise (2).

9. Procédé selon la revendication 8, **caractérisé en ce qu'**un émetteur-récepteur (8) est utilisé en tant que capteur pour l'interrogation radio d'appareils de véhicule (11), dont la portée (36) est supérieure à la portée de réception (35) de la balise (2) pour ledit signal (10).

10. Procédé selon l'une des revendications 1 à 9, **caractérisé en ce que** le signal (10) est émis par intermittence et la courbe de fréquence (13, 14) est traitée de façon discrète dans le temps pour les instants ($27_i$) auxquels le signal (10) est reçu.

11. Procédé selon l'une des revendications 1 à 10, **caractérisé en ce que** la voie (5, 6, 6') d'une route à plusieurs voies (4) sur laquelle se déplace le véhicule (12) est déterminée à partir de la distance (a).

12. Balise (2) pour un système de péage routier (1) pour la détermination de la distance (a) d'un véhicule (12) passant devant celle-ci, lequel est équipé d'un appareil de véhicule (11) émettant un signal (10) présentant une fréquence ($f_s$) avec une courbe temporelle connue (13, 14), **caractérisée par** :

un récepteur (8) conçu pour recevoir le signal (10) d'un véhicule (12) en circulation ;

une mémoire (21) raccordée au récepteur et conçue pour enregistrer la courbe temporelle (13, 14) de la fréquence ($f_B$) du signal reçu (10) par rapport à la courbe temporelle connue ;

un détecteur (22) raccordé à la mémoire (21) et conçu pour la détection d'une modification (17) dépassant une première valeur seuil ($\sigma$) dans la courbe de fréquence (13, 14) enregistrée ;

un premier dispositif d'évaluation (23) raccordé au détecteur (22) et à la mémoire (21) et conçu pour rechercher deux plages lointaines (15, 16) situées avant et après la modification détectée (17) dans la courbe de fréquence (13, 14), lesquelles montrent une modification de fréquence ($f_B$') en-dessous d'une deuxième valeur seuil ($\varepsilon$) ;

un dispositif de mise à l'échelle (24) raccordé à la mémoire (21) et au premier dispositif d'évaluation (23) et conçu pour mettre la courbe de fréquence enregistrée (13, 14) à l'échelle, de manière à ce que les plages lointaines (15, 16) adoptent des valeurs prédéfinies ($\pm\Delta F$) ; et

un deuxième dispositif d'évaluation (25) raccordé en aval du dispositif de mise à l'échelle (24) et conçu pour déterminer ladite distance (a) à partir de la courbe de fréquence mise à l'échelle (13', 14').

13. Balise selon la revendication 12, **caractérisée en ce que** le deuxième dispositif d'évaluation (25) est conçu pour calculer ladite distance (a) à partir de la pente ($f_B$') de la courbe de fréquence mise à l'échelle (13', 14') dans un point d'inflexion (20) de celle-ci.

14. Balise selon la revendication 12, **caractérisée en ce que** le deuxième dispositif d'évaluation (25) est conçu pour calculer ladite distance (a) à partir d'une valeur de fréquence ($f_B$) de la courbe de fréquence mise à l'échelle située entre un point d'inflexion (20) de la courbe de fréquence mise à l'échelle (13', 14') et une plage lointaine (15, 16).

15. Balise selon la revendication 12, **caractérisée en ce que** le deuxième dispositif d'évaluation (25) est conçu pour calculer ladite distance (a) à partir d'une intégrale ($F_B$) de la courbe de fréquence mise à l'échelle (13', 14') sur une section ($\Delta t$) située entre un point d'inflexion (20) de celle-ci et une plage lointaine (15, 16).

16. Balise selon l'une des revendications 12 à 15, **caractérisée en ce qu'**elle comporte un émetteur (8) pour l'émission répétée périodique d'un signal d'interrogation, pour demander à des appareils de véhicule (11) passant devant celle-ci d'émettre respectivement un signal de réponse ($10_i$), lesquels signaux de réponse ($10_i$) forment ledit signal (10) par intermittence, dans lequel la balise (2) traite de façon discrète dans le temps la courbe de fréquence (13, 14) pour des instants ($27_i$) auxquels le signal (10) existe.

17. Balise selon l'une des revendications 12 à 16, **caractérisée en ce qu'**elle comporte un capteur séparé pour la détection de l'approche d'un véhicule (12), lequel ne fait démarrer l'enregistrement de la courbe de fréquence (13, 14) que lorsqu'il détecte l'approche d'un véhicule (12).

18. Balise selon la revendication 17, **caractérisée en ce que** le capteur comprend un émetteur-récepteur (8) pour l'interrogation radio d'appareils de véhicule (11), dont la portée (36) est supérieure à la portée de réception (35) de l'émetteur (8) dudit signal (10), de préférence un émetteur-récepteur avec une antenne directive.

19. Appareil de véhicule pour un système de péage routier pour la détermination de la distance (a) par rapport à une balise (2) du système de péage routier (1), laquelle émet un signal (10) présentant une fréquence avec une courbe temporelle connue, **caractérisé par** :

un récepteur (8) conçu pour recevoir le signal (10) d'une balise (2) ;

une mémoire (21) raccordée au récepteur (8) et conçue pour enregistrer la courbe temporelle (13, 14) de la fréquence ($f_B$) du signal reçu (10) par rapport à la courbe temporelle connue ;

un détecteur (22) raccordé à la mémoire (21) et conçu pour la détection d'une modification (17) dépassant une première valeur seuil ($\sigma$) dans la courbe de fréquence (13, 14) enregistrée ;

un premier dispositif d'évaluation (23) raccordé au détecteur (22) et à la mémoire (21) et conçu pour rechercher deux plages lointaines (15, 16) situées avant et après la modification détectée (17) dans la courbe de fréquence (13, 14), lesquelles montrent une modification de fréquence ($f_B$') en-dessous d'une deuxième valeur seuil ($\varepsilon$) ;

un dispositif de mise à l'échelle (24) raccordé à la mémoire (21) et au premier dispositif d'évaluation (23) et conçu pour mettre la courbe de fréquence enregistrée (13, 14) à l'échelle, de manière à ce que les plages lointaines (15, 16) adoptent des valeurs prédéfinies ($\pm\Delta F$) ; et

un deuxième dispositif d'évaluation (25) raccordé en aval du dispositif de mise à l'échelle et conçu pour déterminer ladite distance (a) à partir de la courbe de fréquence mise à l'échelle (13', 14').

**20.** Appareil de véhicule selon la revendication 19, **caractérisé en ce que** le deuxième dispositif d'évaluation (25) est conçu pour calculer ladite distance (a) à partir de la pente ($f_B'$) de la courbe de fréquence mise à l'échelle (13', 14') dans un point d'inflexion (20) de celle-ci.

**21.** Appareil de véhicule selon la revendication 19, **caractérisé en ce que** le deuxième dispositif d'évaluation (25) est conçu pour calculer ladite distance (a) à partir d'une valeur de fréquence ($f_B$) de la courbe de fréquence mise à l'échelle située entre un point d'inflexion (20) de la courbe de fréquence mise à l'échelle (13', 14') et une plage lointaine (15, 16).

**22.** Appareil de véhicule selon la revendication 19, **caractérisé en ce que** le deuxième dispositif d'évaluation (25) est conçu pour calculer ladite distance (a) à partir d'une intégrale ($F_B$) de la courbe de fréquence mise à l'échelle (13', 14') sur une section ($\Delta t$) située entre un point d'inflexion (20) de celle-ci et une plage lointaine (15, 16).

**23.** Appareil de véhicule selon l'une des revendications 19 à 22, **caractérisé en ce qu'**il comporte un capteur séparé (28 - 34) pour la détection de l'approche d'une balise (2), lequel ne fait démarrer l'enregistrement de la courbe de fréquence (13, 14) que lorsqu'il détecte l'approche d'une balise (2).

**24.** Appareil de véhicule selon la revendication 23, **caractérisé en ce que** le capteur comprend un récepteur de navigation par satellite (32) pour déterminer la position de l'appareil de véhicule (11) et une liste (33) d'emplacements préenregistrés (o) de balises (2), tout en étant conçu pour détecter une approche d'une balise (2) lorsque la position déterminée (p) se trouve à proximité d'un emplacement enregistré (o).

*Fig. 1*

**Fig. 2**

**Fig. 3**

*Fig. 4*

*Fig. 5*

**Fig. 6**

**Fig. 7**

25

13', 14' → $f_B(\Delta t)$ → $a_1$, $a_2$

16, 20 - - - - - - - - - - -

*Fig. 8a*

25

13', 14' → $\int_0^{\Delta t} f_B$ → $a_1$, $a_2$

16, 20 - - - - - - - - - - -

*Fig. 8b*

EP 2 564 233 B1

**Fig. 9**

**Fig. 10**

**Fig. 11**

**Fig. 12**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5790052 A